# EUROPÄISCHE PATENTANMELDUNG

(11) **EP 1 022 890 A2**
(43) Veröffentlichungstag der Anmeldung: **26.07.2000**
(21) Anmeldenummer: 99440366.5
(22) Anmeldetag: 20.12.1999
(51) Int. Cl.: H04M 3/51

(54) **Anrufzentrale**

(30) Priorität: 19.01.1999 DE 19901830
(71) Anmelder: ALCATEL, 75008 Paris (FR)
(72) Erfinder: Hägebarth, Frank, 74366 Kirchheim (DE)
(74) Vertreter: Brose, Gerhard, Dipl.-Ing.

(57) **Zusammenfassung**

Die Erfindung betrifft ein Verfahren zum Bestellen eines bestimmten Produkts eines Verkäufers durch einen Kunden. Um die Anzahl der Mitarbeiter in einem Call-Centre zur Entgegennahme der Anrufe und zur Abarbeitung der Bestellungen verringern bzw. um möglicherweise sogar ganz auf diese Mitarbeiter verzichtet zu können, schlägt die Erfindung ein Verfahren vor, das gekennzeichnet ist durch die nachfolgenden Schritte:
- Auswahl desjenigen Telefonanrufs des Kunden, dessen gewählte Telefonnummer einen vorgegebenen ersten Teil aufweist, um einen Computer eines Telekommunikations-Netzwerks auszuwählen,
- Weiterleiten des Telefonanrufs an den Computer,
- Auswahl desjenigen Telefonanrufs des Kunden, dessen gewählte Telefonnummer einen vorgegebenen zweiten Teil aufweist, um das Produkt auszuwählen,
- Vervollständigen der Bestellung mittels eines computergestützten Dialogs, und
- Weiterleiten der Bestellung an den Verkäufer.

## Beschreibung

Die vorliegende Erfindung betrifft ein Verfahren zum Bestellen eines bestimmten Produkts eines Verkäufers durch einen Kunden. Die Erfindung betrifft außerdem eine Vorrichtung zum Bestellen eines bestimmten Produkts eines Verkäufers durch einen Kunden.

Nach dem Stand der Technik läuft das Bestellen eines bestimmten Produkts, einer Ware oder einer Dienstleistung gleichermaßen, wie folgt ab. Der Kunde hat von dem gewünschten Produkt Kenntnis erlangt, entweder durch Marketing-Aktionen in den Funk- und Printmedien oder auf anderem Wege. Außerdem hat der Kunde Kenntnis von einer dem Produkt zugeordneten Telefonnummer, über die er das gewünschte Produkt bestellen kann. Über die Telefonnummer erreicht der Kunde üblicherweise ein sog. Call-Centre. Die Mitarbeiter des Call-Centre's nehmen den Anruf des Kunden entgegen und bearbeiten seine Bestellung. Dazu erfassen sie an einem Computer, der üblicherweise an ein Computer-Netzwerk angeschlossen ist, den Namen, die Anschrift und die Bankverbindung des Kunden. Der Kunde übermittelt diese Informationen auf Anfrage des Mitarbieters des Call-Centre's.

Außerdem kann der Kunde in einem Dialog mit dem Mitarbeiter genauere Informationen (Farbe, Ausstattung, etc.) zu dem gewünschten Produkt geben. Wenn die Bestellung abgeschlossen ist, wird dem Kunde entweder sofort oder erst später, bspw. wenige Tage vor der Auslieferung des bestellten Produkts, der Liefertermin für das Produkt mitgeteilt.

Diese Art der Bestellung eines bestimmten Produkts hat den Vorteil, daß ein Kunde von zu Hause aus und unabhängig von den Ladenöffnungszeiten bestellen kann. Nachteilig ist es jedoch, daß die Betreiber der Call-Centre einen relativ großen Mitarbeiterstab zur Entgegennahme der Anrufe und zur Abarbeitung der Bestellungen unterhalten müssen. Das ist mit einem sehr hohen Kostenaufwand verbunden, insbesondere wenn man bekenkt, daß die Call-Centres üblicherweise 24 Stunden am Tag erreichbar sein müssen, und daß den Mitarbeitern außerhalb der üblichen Arbeitszeiten relativ hohe Zuschläge gezahlt werden müssen.

Deshalb ist es eine Aufgabe der vorliegenden Erfindung, ein Verfahren der eingangs genannten Art dahingehend auszugestalten und weiterzubilden, daß die Anzahl der Mitarbeiter in einem Call-Centre zur Entgegennahme der Anrufe und zur Abarbeitung der Bestellungen verringert bzw. daß möglicherweise sogar ganz auf diese Mitarbeiter verzichtet werden kann.

Zur Lösung dieser Aufgabe schlägt die Erfindung ausgehend von dem Verfahren der eingangs genannten Art ein Verfahren vor, das gekennzeichnet ist durch die nachfolgenden Schritte:
- Auswahl desjenigen Telefonanrufs des Kunden, dessen gewählte Telefonnummer einen vorgegebenen ersten Teil aufweist, um einen Computer eines Telekommunikations-Netzwerks auszuwählen,
- Weiterleiten des Telefonanrufs an den Computer,
- Auswahl desjenigen Telefonanrufs des Kunden, dessen gewählte Telefonnummer einen vorgegebenen zweiten Teil aufweist, um das Produkt auszuwählen,
- Vervollständigen der Bestellung mittels eines computergestützten Dialogs, und
- Weiterleiten der Bestellung an den Verkäufer.

Nach dem erfindungsgemäßen Verfahren wählt der Kunde eine bestimmte Telefonnummer, die in zwei Teile unterteilt ist. Mit dem ersten Teil der gewählten Telefonnummer wird ein Computer eines Telekommunikations-Netzwerks aufgerufen. Der zweite Teil der Telefonnummer ist dem gewünschten Produkt zugeordnet.

Nach der Anwahl dieser zweigeteilten Telefonnummer ist der Kunde mit dem Computer des Telekommunikations-Netzwerks verbunden. Über den zweiten Teil der gewählten Telefonnummer wird der Kunde mit einem bestimmten Bereich des Computers verbunden, der dem gewünschten Produkt zugeordnet ist. Dieser Bereich des Computers ist bspw. ein bestimmter Teil einer Software zum Bestellen eines Produkts. Durch den Computer des Telekommunikations-Netzwerks wird dann im Rahmen eines computergestützten Dialogs die Bestellung vervollständigt. Das Vervollständigen der Bestellung betrifft zum einen genauere Informationen (Farbe, Ausstattung, etc.) über das Produkt und zum anderen Informationen über den Kunden (Name, Anschrift, Bankverbindung, etc.). Bei einfachen Produkten, die nur in einer Ausführungsform ausgeliefert werden, müssen keine Informationen bzgl. des Produkts eingegeben werden. Der computergestützte Dialog zwischen dem Kunden und dem Computer kann auf verschiedene Weise erfolgen. Wenn die Bestellung vollständig vorliegt, wird sie an den Verkäufer des Produkts weitergeleitet, der dann die Auslieferung des Produkts und die Abrechnung des Kaufpreises veranlaßt.

Das Telekommunikations-Netzwerk ist vorzugsweise als ein sog. Intelligentes Netzwerk ausgebildet, das eine zentrale Komponente zur Steuerung bestimmter Netzwerkfunktionen aufweist.

Das erfindunggemäße Verfahren hat den Vorteil, daß auf die Mitarbeiter in den Call-Centres zur Entgegennahme der Anrufe und zur Abarbeitung der Bestellungen völlig verzichtet werden kann. Die Tätigkeiten der Call-Centers werden auf den Betreiber des Telekommunikations-Netzwerks verlagert. Die Aufgaben der Mitarbeiter der Call-Centres werden durch das Telekommunikations-Netzwerk bzw. durch den Computer des Telekommunikations-Netzwerks automatisch und ohne daß Mitarbeiter eingreifen müssen erledigt. Ein Verkäufer hat somit die Möglichkeit, seine Produkte ohne das Zwischenschalten eines Call-Centre's über das Telefon zu vertreiben. Dadurch kann die Infrastruktur zum Vertrieb der Produkte erheblich reduziert werden. Das führt zu erheblichen Kosteneinsparungen, die sich in höheren Gewinnen für die Verkäufer bzw. in niedrigeren Kaufpreisen für die Kunden niederschlagen können.

Gemäß einer vorteilhaften Weiterbildung der Erfindung wird vorgeschlagen, daß die Telefonnummer des Kunden mit dem Telefonanruf an den Computer übermittelt wird. Bei modernen Telekommunikations-Netzwerken (bspw. bei ISDN) ist dies ohne zusätzlichen Aufwand möglich.

Vorteilhafterweise wird die Identität des Kunden durch den Computer aus der Telefonnummer des Kunden ermittelt. Die Angaben zur Identität des Kunden sind üblicherweise in einer Datenbank des Betreibers des Telekommunikations-Netzwerks gespeichert. Der Telefonnummer des Kunden zugeordnet sind darin der Name, die Anschrift und die Bankverbindung des Kunden gespeichert. Dadurch kann der computergestützte Dialog zur Vervollständigung der Bestellung erheblich verkürzt werden. Er kann bspw. auf die Angabe eines gewünschten Liefertermins, einer besonderen Zahlungsweise oder auf Informationen über das gewünschte Produkt beschränkt werden.

Gemäß einer bevorzugten Ausführungsform der Erfindung wird vorgeschlagen, daß dem Kunden nach der Bestellung des Produkts Informationen über das Produkt mitgeteilt werden. Nachdem die Bestellung an den Verkäufer weitergeleitet worden ist, kann der Verkäufer bestimmte Informationen über das Produkt geben. Diese Informationen kann der Verkäufer unmittelbar an den Kunden oder aber erst an das Telekommunikations-Netzwerk weiterleiten, das die Informationen dann dem Kunden mitteilt. Die Informationen über das Produkt können dem Kunden über das Telekommunikations-Netzwerk, d. h. über eine Telefonverbindung, oder aber auch auf anderem Wege, bspw. über das Internet als Electronic-Mail (E-Mail), übermittelt werden.

Die Informationen können bspw. Sonderangebote, Mengenrabatte o. ä. betreffen, die dem Kunden mitgeteilt werden. Vorteilhafterweise betreffen die Informationen über das Produkt den Liefertermin des bestellten Produkts.

Gemäß einer weiteren bevorzugten Ausführungsform wird vorgeschlagen, daß der computergestützte Dialog auf einem Sprachcomputer ausgeführt wird und die Bestellung mittels Spracheingabe vervollständigt wird.

Alternativ wird vorgeschlagen, daß die Eingabe zusätzlicher Informationen zur Vervollständigung der Bestellung durch den Kunden mittels des Dial-Tone-Multi-Frequency (DTMF)-Verfahrens durchgeführt wird.

Gemäß einer vorteilhaften Weiterbildung der Erfindung wird vorgeschlagen, daß die getätigten Bestellungen so lange für die Kunden unter einer bestimmten Telefonnummer frei zugänglich auf dem Computer des Telekommunikations-Netzwerks abgelegt werden, bis der Verkauf des Produkts erfolgt ist. Dadurch kann der Kunde die von ihm bestellten Produkte gewissermaßen wie in einem virtuellen Warenkorb verwalten. Falls er sich vor dem endgültigen Kauf eines Produkts entscheiden sollte, dieses Produkt doch nicht kaufen zu wollen, kann er es einfach aus seinem Warenkorb zurück in das Regal legen, d. h. er kann auf den Computer des Telekommunikations-Netzwerks zugreifen und die Bestellung des Produkts rückgängig machen. Der Kunde kann auf den Computer zugreifen, indem er ebenfalls eine zweigeteilte Telefonnummer wählt, wobei der erste Teil der Telefonnummer dem Computer und der zweite Teil der Telefonnummer seinem virtuellen Warenkorb zugeordnet ist.

Gemäß einer vorteilhaften Weiterbildung der Erfindung wird vorgeschlagen, daß der Verkauf des Produkts einem Betreiber des Telekommunikations-Netzwerks durch den Verkäufer mitgeteilt wird, und das Produkt über eine Telefonrechnung des Betreibers bezahlt wird. Auf diese Weise wird die Bezahlung des gekauften Produkts für den Kunden und das Einziehen des Kaufpreises für den Verkäufer erheblich erleichtert.

Eine weitere Aufgabe der vorliegenden Erfindung besteht darin, eine Vorrichtung der eingangs genannten Art dahingehend auszugestalten und weiterzubilden, daß die Anzahl der Mitarbeiter in einem Call-Centre zur Entgegennahme der Anrufe und zur Abarbeitung der Bestellungen verringert bzw. daß möglicherweise sogar ganz auf diese Mitarbeiter verzichtet werden kann.

Zur Lösung dieser Aufgabe schlägt die Erfindung ausgehend von der Vorrichtung der eingangs genannten Art eine Vorrichtung vor, die aufweist:
- Mittel zur Auswahl desjenigen Telefonanrufs des Kunden, dessen gewählte Telefonnummer einen vorgegebenen ersten Teil aufweist, um einen Computer eines Telekommunikations-Netzwerks auszuwählen,
- Mittel zum Weiterleiten des Telefonanrufs an den Computer,
- Mittel zur Auswahl desjenigen Telefonanrufs des Kunden, dessen gewählte Telefonnummer einen vorgegebenen zweiten Teil aufweist, um das Produkt auszuwählen,
- Mittel zum Vervollständigen der Bestellung mittels eines computergestützten Dialogs, und
- Mittel zum Weiterleiten der Bestellung an den Verkäufer.

Gemäß einer vorteilhaften Weiterbildung der Erfindung wird vorgeschlagen, daß das Telekommunikations-Netzwerk als ein Intelligentes Netzwerk ausgebildet ist, das eine zentrale Komponente zur Steuerung bestimmter Netzwerkfunktionen aufweist.

Vorteilhafterweise sind auf dem Telekommunikations-Netzwerk die Telefonnummer des Kunden und weitere Informationen über den Kunden abgelegt sind, auf die der Computer Zugriff hat. Vorzugsweise sind als weitere Informationen die Anschrift und/oder die Bankverbindung des Kunden auf dem Telekommunikations-Netzwerk abgelegt. Die Telefonnummer und die weiteren Informationen über den Kunden sind vorzugsweise in einer Datenbank gespeichert.

Gemäß einer anderen vorteilhaften Weiterbildung der Erfindung wird vorgeschlagen, daß die Vorrichtung Mittel aufweist, um einem Betreiber des Telekommunikations-Netzwerks den Verkauf des Produkts mitzuteilen. Dieser kann dann den Kaufpreis des Produkts über die Telefonrechnung entweder im eigenen Namen oder für den Verkäufer einziehen.

Durch die erfindungsgemäße Vorrichtung können praktisch sämtliche Verkaufstätigkeiten von einem Betreiber eines Telekommunikations-Netzwerks durchgeführt werden. Der eigentliche Verkäufer des Produkts hat nur noch eine Lieferantenfunktion. Er stellt das Produkt entweder selbst her oder fungiert als Zwischenhändler und liefert das Produkt gemäß den Angaben des Computers des Telekommunikations-Netzwerks an die Kunden, die das Produkt bestellt haben. Das erfindungsgemäße Verfahren stellt eine besonders kostengünstige Möglichkeit der Bestellung und des Vertriebs von Produkten dar.

## Patentansprüche

1. Verfahren zum Bestellen eines bestimmten Produkts eines Verkäufers durch einen Kunden, **gekennzeichnet durch** die nachfolgenden Schritte:
- Auswahl desjenigen Telefonanrufs des Kunden, dessen gewählte Telefonnummer einen vorgegebenen ersten Teil aufweist, um einen Computer eines Telekommunikations-Netzwerks auszuwählen,
- Weiterleiten des Telefonanrufs an den Computer,
- Auswahl desjenigen Telefonanrufs des Kunden, dessen gewählte Telefonnummer einen vorgegebenen zweiten Teil aufweist, um das Produkt auszuwählen,
- Vervollständigen der Bestellung mittels eines computergestützten Dialogs, und
- Weiterleiten der Bestellung an den Verkäufer.

2. Verfahren nach Anspruch 1, dadurch gekennzeichnet, daß die Telefonnummer des Kunden mit dem Telefonanruf an den Computer übermittelt wird.

3. Verfahren nach Anspruch 2, dadurch gekennzeichnet, daß die Identität des Kunden durch den Computer aus der Telefonnummer des Kunden ermittelt wird.

4. Verfahren nach einem der Ansprüche 1 bis 3, dadurch gekennzeichnet, daß dem Kunden nach der Bestellung des Produkts Informationen über das Produkt mitgeteilt werden.

5. Verfahren nach Anspruch 4, dadurch gekennzeichnet, daß dem Kunden der Liefertermin des Produkts mitgeteilt wird.

6. Verfahren nach einem der Ansprüche 1 bis 5, dadurch gekennzeichnet, daß der computergestützte Dialog auf einem Sprachcomputer ausgeführt wird und die Bestellung mittels Spracheingabe vervollständigt wird.

7. Verfahren nach einem der Ansprüche 1 bis 5, dadurch gekennzeichnet, daß die Eingabe zusätzlicher Informationen zur Vervollständigung der Bestellung durch den Kunden mittels des Dial-Tone-Multi-Frequency (DTMF)-Verfahrens durchgeführt wird.

8. Verfahren nach einem der Ansprüche 1 bis 7, dadurch gekennzeichnet, daß die getätigten Bestellungen so lange für die Kunden unter einer bestimmten Telefonnummer frei zugänglich auf dem Computer des Telekommunikations-Netzwerks abgelegt werden, bis der Verkauf des Produkts erfolgt ist.

9. Verfahren nach einem der Ansprüche 1 bis 8, dadurch gekennzeichnet, daß der Verkauf des Produkts einem Betreiber des Telekommunikations-Netzwerks durch den Verkäufer mitgeteilt wird, und das Produkt über eine Telefonrechnung des Betreibers bezahlt wird.

10. Vorrichtung zum Bestellen eines bestimmten Produkts eines Verkäufers durch einen Kunden, **dadurch gekennzeichnet,** daß die Vorrichtung aufweist:
- Mittel zur Auswahl desjenigen Telefonanrufs des Kunden, dessen gewählte Telefonnummer einen vorgegebenen ersten Teil aufweist, um einen Computer eines Telekommunikations-Netzwerks auszuwählen,
- Mittel zum Weiterleiten des Telefonanrufs an den Computer,
- Mittel zur Auswahl desjenigen Telefonanrufs des Kunden, dessen gewählte Telefonnummer einen vorgegebenen zweiten Teil aufweist, um das Produkt auszuwählen,
- Mittel zum Vervollständigen der Bestellung mittels eines computergestützten Dialogs, und
- Mittel zum Weiterleiten der Bestellung an den Verkäufer.

11. Vorrichtung nach Anspruch 10, dadurch gekennzeichnet, daß das Telekommunikations-Netzwerk als ein Intelligentes Netzwerk ausgebildet ist, das eine zentrale Komponente zur Steuerung bestimmter Netzwerkfunktionen aufweist.

12. Vorrichtung nach Anspruch 10 oder 11, dadurch gekennzeichnet, daß auf dem Telekommunikations-Netzwerk die Telefonnummer des Kunden und weitere Informationen über den Kunden abgelegt sind, auf die der Computer Zugriff hat.

13. Vorrichtung nach Anspruch 12, dadurch gekennzeichnet, daß als weitere Informationen die Anschrift und/oder die Bankverbindung des Kunden auf dem Telekommunikations-Netzwerk abgelegt sind.

14. Vorrichtung nach einem der Ansprüche 10 bis 13, dadurch gekennzeichnet, daß die Vorrichtung Mittel aufweist, um einem Betreiber des Telekommunikations-Netzwerks den Verkauf des Produkts mitzuteilen.
